# EUROPÄISCHE PATENTANMELDUNG

(11) **EP 3 178 302 A1**
(43) Veröffentlichungstag der Anmeldung: **14.06.2017**
(21) Anmeldenummer: 16201043.3
(22) Anmeldetag: 29.11.2016
(51) Int. Cl.: A01B 63/10, A01B 69/00, A01B 71/02

(54) **VORRICHTUNG UND VERFAHREN ZUR REGELUNG DES BETRIEBS EINES HYDRAULISCH BETÄTIGBAREN SCHLEPPGERÄTS AN EINEM FAHRZEUG**

(30) Priorität: 10.12.2015 DE 102015224757
(71) Anmelder: ROBERT BOSCH GMBH, 70442 Stuttgart (DE)
(72) Erfinder: Schleyer, Markus, 71640 Ludwigsburg (DE); Rose, Steffen, 71638 Ludwigsburg (DE); Michalke, Gabriele, 71263 Weil Der Stadt (DE); Falck, Tillmann, 70178 Stuttgart (DE)
(74) Vertreter: Thürer, Andreas

(57) **Zusammenfassung**

Die Erfindung betrifft eine Vorrichtung (1) an einem Fahrzeug (2), insbesondere einen Traktor, mit einer hydraulischen Betätigungseinheit (3) zur Regelung des Betriebs eines Schleppgeräts (4) an dem Fahrzeug (2), umfassend zumindest eine Lageerfassungseinheit (7) mit mindestens einer Kamera (8), Lageerfassungsmarkierungen (9a, 9b, 9c) und einer Auswerteeinheit (10) sowie eine datenleitende Verbindung (11) hin zu einem der hydraulischen Betätigungseinheit (3) zugeordneten Steuergerät (13). Weiter wird ein Verfahren vorgeschlagen, wobei mittels einer solchen Lageerfassungseinheit (7) die Lage des Schleppgeräts (4) bestimmt werden kann und bedarfsorientiert die Lage durch einen geeigneten Betrieb der hydraulischen Betätigungseinheit (3) einstellbar ist.

## Beschreibung

Die vorliegende Erfindung betrifft eine Vorrichtung für ein Fahrzeug, insbesondere einen Traktor, mit einer hydraulischen Betätigungseinheit zur Regelung des Betriebs eines Schleppgeräts an dem Fahrzeug sowie ein hierfür geeignetes Betriebsverfahren.

Insbesondere findet die Erfindung Anwendung bei einem Traktor, einem landwirtschaftlichen Ackerschlepper, einer mobilen Arbeitsmaschine zur Feldbearbeitung oder dergleichen. Traktoren bzw. Ackerschlepper werden als universell einsetzbare Arbeitsmaschinen vorrangig in der Landwirtschaft zur Bearbeitung von Ackerböden eingesetzt. Das Pflügen als eine der häufigsten Anwendungen stellt hohe Anforderungen an den Antriebsstrang des Traktors und die Regelgüte einer elektronisch-hydraulischen Hubwerksregelung, denn nur mit einem abgestimmten Betrieb können die Pflügearbeiten schnell und effizient durchgeführt werden. Vor allem bei stark inhomogenen und sehr feuchten Böden besteht aufgrund einer sehr großen Widerstandskraft am Pflug die Möglichkeit, dass der Traktor steckenbleibt und/oder der Motor abgewürgt wird. Zusätzlich zu einer Lagerregelung des Pflugs kann eine Zugkraftregelung vorgesehen sein, die ein Abwürgen des Motors dadurch zu verhindern versucht, dass die Zugkraft am traktorseitigen Gelenk des Unterlenkers gemessen und diese bzw. deren Gradient auf einen Wert geregelt wird, welcher ein Abwürgen des Motors verhindert bzw. eine Reduzierung des Schlupfs der Antriebsräder bewirkt. Dies geschieht insbesondere durch ein (kurzzeitiges) Anheben des Pflugs und der daraus resultierenden Verringerung der Widerstandskraft des Pflugs. Zudem verbessert sich bei sehr inhomogenen Böden das Resultat des Pflugprozesses, da der Pflug in sehr dichten Bodenbereichen seine Pflugtiefe verringern würde. Bei sehr welligen und unebenen Böden verbessert sich ebenso das Pflugbild und der Komfort wird erhöht, da sich die Pflugtiefe über die variierende Zugkraft dem Bodenprofil besser anpasst, als wenn auf Lage bzw. Tiefe des Pflugs geregelt werden würde.

Um die Lage des Pflugs zu regeln, ist es bekannt, die Lage des Hubwerks als Regelgröße heranzuziehen. Der Lagesensor, der von einer Kurvenscheibe im Hubwerk betätigt wird, liefert den Istwert. Ein zusätzlich der Lageregelung überlagerter Zugkraftregelkreis sieht für die Ermittlung der Zugkraft zwei Kraftmessbolzen vor, die in das Gelenk des Unterlenkers eingebaut sind.

Auch wenn die geschilderten Ansätze für den Betrieb solcher Traktoren bzw. Ackerschlepper bereits gute Ergebnisse liefern, so sind die verfügbaren Systeme gleichwohl teilweise zu komplex und damit zu kostenintensiv, nicht ausreichend verlässlich und/oder zu ungenau. Insoweit besteht insbesondere bei der Ermittlung der Lage des Schleppgeräts bzw. der Bestimmung der Zugkraft Bedarf an Verbesserungen.

Hiervon ausgehend ist es Aufgabe der vorliegenden Erfindung, eine Vorrichtung und ein Verfahren zu schaffen, die die genannten Nachteile lindert, oder sogar vermeidet. Insbesondere soll auf konstruktiv einfache und für die Umgebungsbedingungen im Feld geeignete Art die Ermittlung der Lage des Schleppgeräts sowie der Zugkraft verbessert werden.

Diese Aufgaben werden gelöst mit einer Vorrichtung und einem Verfahren gemäß den unabhängig formulierten Patentansprüchen. Weitere Ausgestaltungen der Erfindung sind in den abhängig formulierten Patentansprüchen angegeben. Es ist darauf hinzuweisen, dass die Beschreibung, insbesondere im Zusammenhang mit den Figuren, weitere Einzelheiten und Weiterbildungen der Erfindung anführen, die mit den Merkmalen aus den Patentansprüchen kombinierbar sind.

Hierzu trägt eine Vorrichtung an einem Fahrzeug mit einer hydraulischen Betätigungseinheit zur Regelung des Betriebs eines Schleppgeräts an dem Fahrzeug bei, umfassend zumindest eine Lageerfassungseinheit mit mindestens einer Kamera, mindestens einer Lageerfassungsmarkierung, eine Auswerteeinheit und einer datenleitenden Verbindung hin zu einem der hydraulischen Betätigungseinheit zugeordneten Steuergerät.

Dabei handelt es sich bei dem Fahrzeug insbesondere um einen Traktor bzw. einen sogenannten Ackerschlepper. Als Schleppgerät wird insbesondere ein Pflug oder ein ähnliches Bodenbearbeitungsgerät angesehen. Zur Bestimmung der Lage, insbesondere der Höhenlage des Schleppgeräts über Boden, ist eine Lageerfassungseinheit vorgesehen, die mindestens eine Kamera sowie eine oder mehrere Lageerfassungsmarkierungen umfasst. Eine Lageerfassungsmarkierung kann ein optisch auffälliges Element sein, wobei dies zweidimensional (z. B. nach Art von Strichen, Symbolen, Aufklebern) und/oder dreidimensional (z. B. nach Art von Nippeln, Fahnen, etc.) sein kann. Die Lageerfassungsmarkierung ist bevorzugt "passiv", es kann aber auch z. B. mit eigenen Leuchtmitteln versehen sein. Bevorzugt ist, dass mindestens zwei, insbesondere mindestens drei (voneinander beabstandete) Lageerfassungsmarkierungen vorgesehen sind, die insbesondere alle von einer feststehenden (ggf. auch beweglichen) Kamera erfasst werden können. Eine zugehörige Auswerteeinheit ist mit der mindestens einen Kamera elektrisch und datenleitend verbunden und eingerichtet, deren Betrieb zu regeln und deren Messsignale zu verarbeiten. Die Auswerteeinheit ist insbesondere eingerichtet, eine Analyse der Bilddaten der Kamera vorzunehmen, so dass die Lageerfassungsmarkierungen eindeutig bezüglich ihrer Lage/Position erfasst bzw. bestimmt werden können.

Die in der Auswerteeinheit bestimmte Lage kann mit vorgegebenen (z. B. gespeicherten und/oder von dem Bediener des Fahrzeugs eingestellten) Parametern abgeglichen oder beeinflusst werden, wobei dann auch ein Regelungssignal an das Steuergerät übermittelt wird und dabei der Betrieb der hydraulischen Betätigungseinheit des Schleppgeräts beeinflusst werden kann. Die Auswerteeinheit kann ein separates (elektronisches) Aggregat sein, es ist aber auch möglich, dass die Auswerteeinheit Teil des Steuergeräts zur Ansteuerung der hydraulischen Betätigungseinheit selbst ist. Die (mindestens eine) datenleitende Verbindung zwischen Auswerteeinheit und Steuergerät kann kabelgebunden oder kabellos realisiert sein. Das Steuergerät und/oder die Auswerteeinheit können einer Fahrzeugsteuerung zugeordnet oder unabhängig davon eingerichtet sein.

Die mindestens eine Kamera ist hierfür zweckmäßiger Weise hin auf die mindestens eine Lageerfassungsmarkierung gerichtet. Dies kann permanent der Fall sein, oder auch bedarfsgerecht so (temporär) eingestellt werden.

Die mindestens eine Lageerfassungsmarkierung ist zumindest auf dem Schleppgerät oder einem (fahrzeugseitigen) Hubwerk des Schleppgeräts angeordnet. Sind mehrere Lageerfassungsmarkierungen vorgesehen, können diese auch sowohl auf dem Schleppgerät als auch auf dem Hubwerk positioniert sein.

Die Ausführungsform, bei der die mindestens eine Kamera auf das Schleppgerät gerichtet und die Lageerfassungsmarkierungen am Schleppgerät positioniert sind, bietet den Vorteil, dass die bekannte Geometrie bzw. die Abmessungen eines bestimmten Pfluges in der Auswerteeinheit, dem Steuergerät oder der Fahrzeugsteuerung gespeichert und für die Auswertung so einfach bereitgestellt werden kann. Damit kann ggf. die Genauigkeit der Auswertung mit Bezug auf konkret hinterlegte Gestalten des Schleppgeräts verbessert werden.

Die weitere bevorzugte Ausführung, nach der die Kamera hin auf das (fahrzeugseitige) Hubwerk gerichtet und die Lageerfassungsmarkierungen z. B. an einem Oberlenker des Hubwerks positioniert sind, hat den Vorteil, dass sie unabhängig in der aktuellen Art des Schleppgeräts ist, so dass ein Austausch unterschiedlicher Schleppgeräte einfach möglich ist, ohne hierfür das nachfolgende im Detail noch erläuterte Verfahren und/oder das Schleppgerät selbst neu einzurichten.

Es ist hierfür zweckmäßig, dass die mindestens eine Kamera am Fahrzeug und/oder dem Schleppgerät angeordnet ist. Gegebenenfalls können auch mehrere Kameras vorgesehen sein, so dass Fahrzeug und Schleppgerät mit einer Kamera ausgeführt sein können, die spezifischen Funktionen (Lage- und/oder Zugkraftermittlung) zugeordnet sind.

Mit Vorteil ist zu der Lageerfassungseinrichtung zusätzlich eine Zugkraftmesseinrichtung vorhanden, die datenleitend mit der Auswerteeinheit verbunden ist. Vorzugsweise ist die Zugkraftmesseinrichtung mit der mindestens einen Kamera gekoppelt, die auf ein spannungsoptisches Material gerichtet ist.

Unter einem "spannungsoptischen Material" wird hier insbesondere ein Material verstanden, dass infolge unterschiedlicher Spannungszustände die Gestalt ändert, z. B. hinsichtlich der Form und/oder der Farbe. Gegebenenfalls ist es möglich, dass das spannungsoptische Material eine Oberflächenmarkierung hat und/oder ausbildet, welche in Reaktion auf veränderte Krafteinwirkungen verändert wird. Hierfür wird insbesondere ein Material aus der folgenden Gruppe vorgeschlagen: Plexiglas, Araldit (Epoxyharz), Makrolan.

Bei der hier zum Einsatz gelangenden Spannungsoptik werden insbesondere Materialen (bzw. Bauteile) aus speziellen durchsichtigen Kunststoffen mit polarisiertem Licht durchstrahlt, während sie mechanisch belastet werden. Der Spannungszustand im Material ändert dann die Polarisation des Lichts. Abhängig vom lokalen Spannungszustand und der genauen Anordnung an einem Objekt erscheinen auf dem Material beispielsweise helle, dunkle und/oder farbige Streifen (Isoklinen und Isochromaten), wenn das Material durch einen Polarisationsfilter, der Bestandteil einer Kamera ist oder mit dieser in Wechselwirkung stehen kann, betrachtet wird. Von diesem Streifen-Muster kann auf die Spannungsverteilung im Material geschlossen werden. Hierfür können Referenz-Streifen-Muster zu verschiedenen Zugkraft-Situationen bereitgestellt sein, die mit dem von der Kamera aktuell erfassten Streifen-Muster verglichen werden. Hieraus kann folglich über die Auswerteeinheit die aktuell herrschende Zugkraft am Schleppgerät ermittelt bzw. abgeschätzt werden.

Zweckmäßig ist das spannungsoptische Material am Schleppgerät und/oder am Hubwerk angebracht. Sofern zweckdienlich, ist das spannungsoptische Material am Schleppgerät angebracht, insbesondere direkt am Träger des Pfluges befestigt, so dass dort herrschende Spannungen unmittelbar am Schleppgerät detektiert werden können. Im Falle, dass das spannungsoptische Material am Unterlenker des Hubwerkes positioniert ist, erfolgt die Energie- und Datenübertragung zum Fahrzeug auf besonders kurzem Wege, womit eine kompakte, störunanfällige und einfache Anordnung realisiert ist.

Falls gewünscht, kann die hier vorgeschlagene Zugkraftmesseinrichtung unabhängig von der Lageerfassungseinheit Anwendung finden, z. B. mit dem nachstehenden Aufbau: Vorrichtung an einem Fahrzeug mit einer hydraulischen Betätigungseinheit zur Regelung des Betriebs eines Schleppgeräts an dem Fahrzeug, umfassend zumindest eine Zugkraftmesseinrichtung mit mindestens einer Kamera, mindestens einem spannungsoptischen Material, einer Auswerteeinheit und einer datenleitenden Verbindung hin zu einem der hydraulischen Betätigungseinheit zugeordneten Steuergerät. Soweit hier mit Bezug auf die Zugkraftmesseinrichtung Weiterbildungen aufgezeigt sind, können diese gleichermaßen bei dieser Vorrichtung gelten.

Die hydraulische Betätigungseinheit umfasst bevorzugt einen Hubmechanismus für das Schleppgerät, der von der Auswerteeinheit aktivierbar ist. Hierfür sind insbesondere elektrische oder datenleitende Verbindungen vorgesehen. Insbesondere sind die Auswerteeinheit und der Hubmechanismus so eingerichtet, dass die Auswerteeinheit mindestens eine Zustandsgröße einstellen und/oder auf ein Stellorgan des Hubmechanismus zugreifen kann.

Weitere Details der Vorrichtung ergeben sich auch aus der nachfolgenden Erläuterung zu den Betriebsverfahren. Insbesondere können die Erläuterungen zu den Verfahren hier ergänzend herangezogen werden. Ebenso gilt, dass die vorstehenden Erläuterungen zur Vorrichtung die Beschreibung der Verfahren ergänzen können.

Gemäß einem weiteren Aspekt wird ein Verfahren zum Betrieb eines Fahrzeugs, insbesondere eines Traktors, mit einer hydraulischen Betätigungseinheit zur Regelung des Betriebs eines Schleppgeräts an dem Fahrzeug vorgeschlagen. Das Verfahren wird dabei mit der hier ebenfalls vorgeschlagenen Vorrichtung durchgeführt, wobei insbesondere die Auswerteeinheit dazu eingerichtet ist, das Verfahren durchzuführen. Das Verfahren umfasst zumindest die folgenden Schritte:
a) Erfassen der mindestens einen Lageerfassungsmarkierung mittels einer darauf gerichteten Kamera;
b) Ermitteln einer Höhenlage des Schleppgeräts in Bezug auf den Boden aus der erfassten Lage der Lageerfassungsmarkierungen und der bekannten Gestalt des Schleppgeräts;
c) Vergleichen der ermittelten Höhenlage mit einer Referenz-Höhenlage;
d) Aktivieren der hydraulischen Betätigungseinheit, wenn die ermittelte Höhenlage von einer Referenz-Höhenlage abweicht.

Die Schritte a) bis d) werden bevorzugt in der angegebenen Reihenfolge durchgeführt, wobei gleichwohl die Schritte zumindest teilweise zeitlich überlagert und/oder separat wiederholt werden können. So kann es beispielsweise auftreten, dass die Schritte a) bis c) häufiger wiederholt werden, bevor Schritt d) durchgeführt wird, nämlich insbesondere erst dann, wenn die Bedingung in Schritt d) erfüllt ist.

Zur Durchführung von Schritt a) erfasst eine ausgewählte bzw. ggf. speziell eingerichtete Kamera die mindestens eine Lageerfassungsmarkierung, wobei sie insbesondere ein Abbild davon erstellt und an die Auswerteeinheit übermitteln kann. Zu diesem Zweck kann die Kamera verfahren bzw. geschwenkt werden und/oder in einer Position ortsfest fixiert sein. Dieses Abbild kann gleichzeitig analysiert und/oder ggf. zwischengespeichert werden.

Ausgehend von diesen seitens der Kamera erzeugten (Bild-)Daten, kann gemäß Schritt b) zumindest die Höhenlage des Schleppgeräts in Bezug auf den Boden aus der erfassten Lage der Lageerfassungsmarkierungen und der bekannten Gestalt des Schleppgeräts ermittelt werden. Die (insbesondere geodätische) "Höhenlage" betrifft in diesem Zusammenhang bevorzugt eine Kenngröße, die beispielsweise eine Aussage zur Eindringtiefe des Schleppgeräts in den Boden repräsentiert.

Die so ermittelte Höhenlage kann insbesondere in der Auswerteeinheit mit einer Referenz-Höhenlage verglichen werden (Schritt c)). Die Referenz-Höhenlage kann im Fahrzeug hinterlegt bzw. gespeichert sein und der Auswerteeinheit zur Verfügung gestellt werden. Die (aktuelle) Referenz-Höhenlage wird insbesondere in Abhängigkeit mindestens eines (aktuellen) Betriebsparameters des Fahrzeugs (z. B. Geschwindigkeit, Motorlast, etc.) und/oder der hydraulischen Betätigungseinheit (z. B. Hubwerksstellung, etc.) ausgewählt. Insoweit wird insbesondere geprüft, ob eine gewünschte bzw. erwartete Referenz-Höhenlage tatsächlich aktuell vorliegt.

Gemäß Schritt d) wird dann, wenn die ermittelte Höhenlage von der aktuelle relevanten bzw. erwarteten Referenz-Höhenlage abweicht, die hydraulische Betätigungseinheit aktiviert, um eine Anpassung der aktuellen Lage des Schleppgeräts hin zur Referenz-Höhenlage vorzunehmen, also insbesondere die Höhenlage des Schleppgeräts über dem Boden anzuheben oder abzusenken. Gegebenenfalls kann dieser Betätigungsvorgang auch mit den in Schritten a) bis c) genannten Schritten überwacht und geregelt werden. Es ist aber auch möglich, dass eine separate Vorgabe aus dem Vergleich gemäß Schritt c) fest vorgegeben und gesteuert wird.

Bevorzugt ist, dass alle Schritte a) bis d) während der Fahrt des Fahrzeugs durchgeführt werden. Ganz besonderes bevorzugt wird das Verfahren vom Fahrer und/oder automatisch mit vorgebbaren Fahrsituationen angestoßen und dann intermittierend und/oder kontinuierlich durchgeführt, bis es vom Fahrer und/oder automatisch bei einer vorgebbarer Fahrsituationen beendet wird.

Gemäß einem anderen Aspekt wird ein weiteres Verfahren zum Betrieb eines Fahrzeugs mit einer hydraulischen Betätigungseinheit zur Regelung des Betriebs eines Schleppgeräts an dem Fahrzeug vorgeschlagen. Das Verfahren wird dabei mit der hier ebenfalls vorgeschlagenen Vorrichtung mit einer Zugkraftmesseinrichtung durchgeführt, wobei insbesondere die Auswerteeinheit dazu eingerichtet ist, das Verfahren durchzuführen. Das Verfahren umfasst zumindest die folgenden Schritte:
A) Erfassen des Zustands des spannungsoptischen Materials mittels einer darauf gerichteten Kamera;
B) Ermitteln einer Zugkraft am Schleppgerät aus dem erfassten Zustand des spannungsoptischen Materials;
C) Vergleichen der ermittelten Zugkraft mit einer Referenz-Zugkraft;
D) Aktivieren der hydraulischen Betätigungseinheit, wenn die ermittelte Zugkraft von einer Referenz-Zugkraft abweicht.

Die Schritte A) bis D) werden bevorzugt in der angegebenen Reihenfolge durchgeführt, wobei gleichwohl die Schritte zumindest teilweise zeitlich überlagert und/oder separat wiederholt werden können. So kann es beispielsweise auftreten, dass die Schritte A) bis C) häufiger wiederholt werden, bevor Schritt D) durchgeführt wird, nämlich insbesondere erst dann, wenn die Bedingung in Schritt D) erfüllt ist.

Zur Durchführung von Schritt A) erfasst eine ausgewählte bzw. ggf. speziell eingerichtete Kamera den Zustand des spannungsoptischen Materials, wobei sie insbesondere ein Abbild davon erstellt und an die Auswerteeinheit übermitteln kann. Zu diesem Zweck kann die Kamera verfahren bzw. geschwenkt werden und/oder in einer Position ortsfest fixiert sein. Dieses Abbild kann gleichzeitig analysiert und/oder ggf. zwischengespeichert werden. Zu diesem Zweck kann die Kamera auch mit einem Polarisationsfilter ausgestattet sein oder mit einem solchen zusammenwirken.

Ausgehend von diesen seitens der Kamera erzeugten (Bild-)Daten, kann gemäß Schritt B) zumindest die Zugkraft am Schleppgerät ermittelt werden. Die Zugkraft meint hierbei insbesondere einen Kennwert für die Kraft, die seitens des Fahrzeugs aufgebracht werden muss, um das Schleppgerät zu ziehen. Die Zugkraft ist insbesondere auch von der Eindringtiefe des Schleppgeräts in den Boden abhängig.

Die so ermittelte Zugkraft kann insbesondere in einer zugehörigen Auswerteeinheit mit einer Referenz-Zugkraft verglichen werden (Schritt C)). Die Referenz-Zugkraft kann im Fahrzeug hinterlegt bzw. gespeichert sein und der Auswerteeinheit zur Verfügung gestellt werden. Die (aktuelle) Referenz-Zugkraft wird insbesondere in Abhängigkeit mindestens eines (aktuellen) Betriebsparameters des Fahrzeugs (z. B. Geschwindigkeit, Motorlast, etc.) und/oder der hydraulischen Betätigungseinheit (z. B. Hubwerksstellung, etc.) ausgewählt. Insoweit wird insbesondere geprüft, ob eine gewünschte bzw. erwartete Referenz-Zugkraft tatsächlich aktuell vorliegt.

Gemäß Schritt D) wird dann, wenn die ermittelte Zugkraft von der aktuelle relevanten bzw. erwarteten Referenz-Zugkraft abweicht, die hydraulische Betätigungseinheit aktiviert, um eine Anpassung der aktuellen Lage des Schleppgeräts in der Weise vorzunehmen, dass die Referenz-Zugkraft besser erreicht wird, also insbesondere wird die Höhenlage des Schleppgeräts über dem Boden angehoben oder abgesenkt. Gegebenenfalls kann dieser Betätigungsvorgang auch mit den in Schritten A) bis C) genannten Schritten überwacht und geregelt werden. Es ist aber auch möglich, dass eine separate Vorgabe aus dem Vergleich gemäß Schritt C) fest vorgegeben und gesteuert wird.

Bevorzugt ist, dass alle Schritte A) bis D) während der Fahrt des Fahrzeugs durchgeführt werden. Ganz besonderes bevorzugt wird das Verfahren vom Fahrer und/oder automatisch mit vorgebbaren Fahrsituationen angestoßen und dann intermittierend und/oder kontinuierlich durchgeführt, bis es vom Fahrer und/oder automatisch bei einer vorgebbarer Fahrsituationen beendet wird.

Bevorzugt wird mit einer Zugkraftmesseinrichtung zusätzlich die Zugkraft ermittelt. Mit Vorteil wird die mittels der Zugkraftmesseinrichtung ermittelte Zugkraft verwendet, wenn ein vorgegebener Abweichungsparameter von einer erwartenden Zugkraft erreicht wird. Vorzugsweise wird die erwartete Zugkraft seitens des Bedieners des Fahrzeugs bereitgestellt.

Die hier aufgezeigte Anordnung und/oder Methode zur Lageregelung bietet insbesondere die folgenden Vorteile, dass durch Messung der Lage mittels der Kamera und der Lageerfassungsmarkierungen die Lage bzw. Tiefe des Anbaugerätes, insbesondere eines Pfluges, in verlässlicher, genauer und technisch einfacher Weise realisiert werden.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder vorstehenden Beschreibung frei kombinierbar, es sei denn, dass sich für einen Fachmann zwingend etwas anderes ergibt bzw. eine solche Kombination hier explizit untersagt wird. Es zeigen:
- Fig. 1:: schematisch eine Seitenansicht eines Traktors mit einer hydraulischen Betätigungseinheit zur Regelung des Betriebs eines Schleppgeräts umfassend eine Kamera für eine Lageerfassungseinheit;
- Fig. 2:: Seitenansicht gemäß Fig. 1, bei der die am Fahrzeug angebrachte Kamera auf das Schleppgerät gerichtet und am Schleppgerät Lageerfassungsmarkierungen der Lageerfassungseinheit und ein das spannungsoptische Material einer Zugkraftmesseinrichtung positioniert sind;
- Fig. 3:: Seitenansicht gemäß Fig. 1, bei der die Kamera auf das Hubwerk gerichtet und am Hubwerk die Lageerfassungsmarkierungen am Oberlenker und das spannungsoptische Material am Unterlenker positioniert sind;
- Fig. 4:: Seitenansicht gemäß Fig. 1, bei der die Lageerfassungseinheit mit integrierter Kamera am Schleppgerät positioniert ist; und
- Fig. 4a:: ein Detail der Lageerfassungseinheit mit integrierter Kamera.

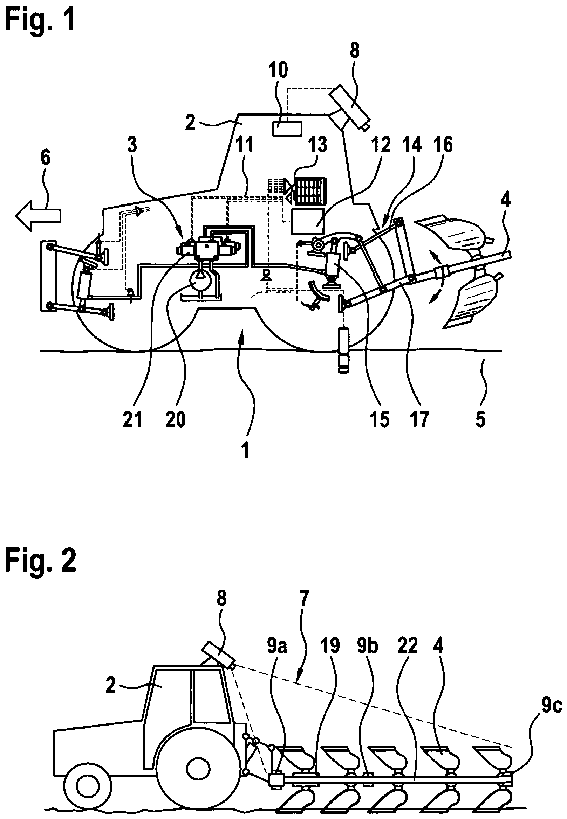

Fig. 1 zeigt die prinzipielle Darstellung der hier angegebenen Vorrichtung 1 an einem Fahrzeug 2, insbesondere nach Art eines Traktors bei der Bodenbearbeitung mit einem Schleppgerät 4, insbesondere mit einem Pflug. Dabei zieht das Fahrzeug 2 bei einer Fahrt in Fahrtrichtung 6 das Schleppgerät 4 hinter sich her und durch eine Oberschicht des Bodens. Der allgemeine Fahrbetrieb des Fahrzeugs 2 kann über eine (ggf. separate) Fahrzeugsteuerung 12 beeinflusst werden. Die Lage bzw. Position des Schleppgeräts 4 kann mit einer hydraulischen Betätigungseinheit 3, aufweisend ein Steuergerät 13 zur Ansteuerung der hydraulischen Betätigungseinheit 3 und einen Hubmechanismus 15, eingestellt werden. Die hydraulische Betätigungseinheit 3 kann insbesondere wie folgt aufgebaut sein: Die Pumpe 20 fördert einen Ölstrom zum Regelventil 21, welches den Hubmechanismus 15 steuert. Dieser wirkt auf die Unterlenker 17, wodurch das Schleppgerät 4 gehoben, gehalten oder abgesenkt werden kann.

Weiter ist eine Kamera 8 einer Lageerfassungseinheit 7 vorgesehen, die an bzw. auf dem Fahrzeug 2 angebracht ist. Die Kamera 8 ist auf das (abgebrochen dargestellte, hier einen Pflug bildende) Schleppgerät 4 gerichtet. Die Kamera 8 kann z. B. eine für optische Messungen geeignete Rückwärts- bzw. Rückfahrkamera oder eine speziell für den hier beschriebenen Anwendungszweck verbaute Digitalkamera (hochauflösend) und bevorzugt mit einem Polarisationsfilter sein.

Um die Lage des Pflugs im Raum und somit auch seine Tiefe bzw. Höhe (Höhenlage 25) ermitteln zu können, sind gemäß Fig. 2 an dem Pflug beispielsweise drei optisch markante Lageerfassungsmarkierungen 9a, 9b und 9c beidseitig angebracht. Zudem sind die Geometrie bzw. die Abmessungen des Pflugs bekannt. Für die Bestimmung eines zugkraftäquivalenten Werts für die Zugkraftregelung ist ein für spannungsoptische Aufnahmen geeignetes spannungsoptisches Material 19 an dem Träger 22 des Pflugs in Höhe des ersten Scharpaars beidseitig befestigt, z. B. durch Kleben. Aufgrund der von der Zugkraft beim Pflügen abhängigen Verformung durch Zug- und Biegespannungen im Träger 22 wird durch eine Auswertung der Kamerabilder auf ein Äquivalent der Zugkraft geschlossen.

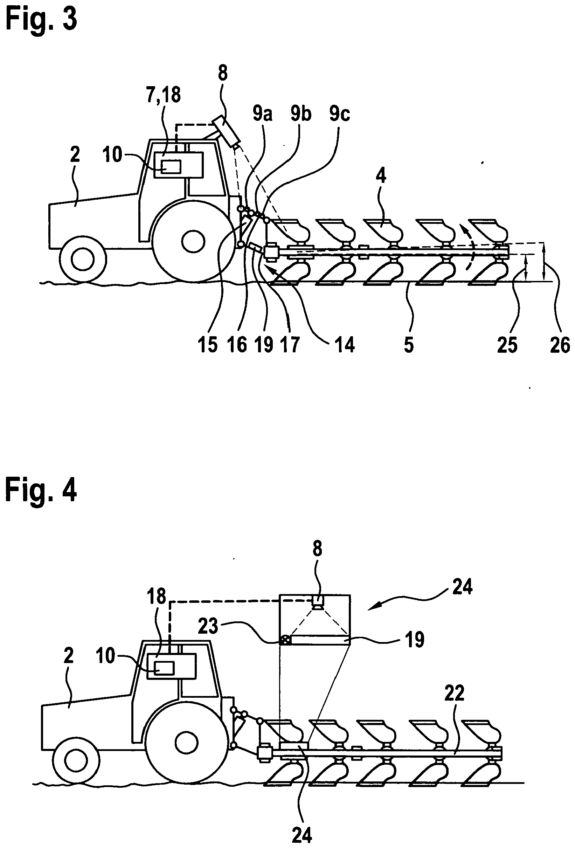

Entsprechend Fig. 3 sind die Lageerfassungsmarkierungen 9a, 9b und 9c für die Lage- bzw. Neigungsbestimmungen des Hubwerks 14 direkt am Oberlenker 16 des (fahrzeugseitigen) Hubwerks 14 befestigt. Zudem ist das spannungsoptische Material 19, am Unterlenker 17 des Hubwerks 14 befestigt. Die Anordnung hat den Vorteil, dass sie unabhängig von der Wahl des Schleppgeräts 4 ist. So müssen die Schleppgeräte 4 nicht mit diesen Lageerfassungsmarkierungen und/oder spannungsoptischen Materialen bestückt werden und ein Austausch der Schleppgeräte 4 ist wesentlich einfacher.

Zusätzlich können in beiden Varianten gemäß Fig. 2 und 3 im Bereich des spannungsoptischen Materials 19 Lichtquellen (hier nicht explizit dargestellt) angebracht werden, falls das Umgebungslicht nicht für eine optische Auswertung ausreichen sollte. Mindestens eine optische Lageerfassungsmarkierung 9a, 9b, 9c kann grundsätzlich z. B. auch als Infrarot-LEDs ausgeführt sein. Dies macht eine Verwendung des Messprinzips auch bei geringer Umfeldbeleuchtung (z. B. in der Nacht) möglich.

Zudem ist hier beispielhaft ein Verfahren zum Betrieb des Fahrzeugs 2 mit einer hydraulischen Betätigungseinheit zur Regelung des Betriebs eines Schleppgeräts 4 veranschaulicht. Zunächst werden die Lageerfassungsmarkierungen 9a, 9b, 9c mittels der darauf gerichteten Kamera 8 erfasst. Dann wird die (aktuelle) Höhenlage 25 des Schleppgeräts 4 in Bezug auf den Boden 5 aus der erfassten Lage der Lageerfassungsmarkierungen 9a, 9b, 9c und der bekannten Gestalt des Schleppgeräts 4 ermittelt. Die so ermittelte Höhenlage 25 wird dann mit einer (gespeicherten bzw. gewünschten) Referenz-Höhenlage 26 verglichen. Wenn die ermittelte Höhenlage 25 von einer Referenz-Höhenlage 26 (mehr als gewünscht bzw. erlaubt) abweicht, wird die hydraulische Betätigungseinheit bzw. der Hubmechanismus 15 aktiviert und das Schleppgerät 4 verschwenkt.

Fig. 4 zeigt die Zusammenfassung des spannungsoptischen Materials 19, einer Lichtquelle 23 und einer Kamera 8 in einer gesonderten und für sich abgeschlossenen Einheit 24 (siehe Fig. 4a). Diese ist so auf dem Schleppgerät 4 (oder auch am Unterlenker des Hubwerks 14 des Ackerschleppers) montiert, dass das spannungsoptische Material 19 direkt am Trägermaterial befestigt ist und somit die Spannungen detektieren kann. Die Energie- und Datenübertragung zum Fahrzeug 2 (falls nicht am Unterlenker des Hubwerks 14 verbaut) erfolgt z. B. über Kabel, in denen die Datenleitungen integriert sind. Zudem können optische Spannungssensoren entweder am Unterlenker 17 oder am Träger 22 des Pflugs angebracht sein, um somit auf die Zugkraft beim Pflügen zu schließen.

Zudem ist hier beispielhaft ein Verfahren zum Betrieb des Fahrzeugs 2 mit einer hydraulischen Betätigungseinheit zur Regelung des Betriebs eines Schleppgeräts 4 veranschaulicht. Zunächst wird der Zustand des spannungsoptischen Materials 19 mittels der darauf gerichteten Kamera 8 erfasst. Dann wird die (aktuelle) Zugkraft des Schleppgeräts 4 aus dem erfassten Zustand des spannungsoptischen Materials 19 ermittelt. Die so ermittelte Zugkraft (Last am Schleppgerät 4) wird dann mit einer (gespeicherten bzw. gewünschten) Zugkraft verglichen. Wenn die ermittelte Zugkraft von der Referenz-Zugkraft (mehr als gewünscht bzw. erlaubt) abweicht, wird die hydraulische Betätigungseinheit bzw. der Hubmechanismus 15 aktiviert und das Schleppgerät 4 verschwenkt. Alternativ bzw. kumulativ kann auch die Fahrtgeschwindigkeit des Fahrzeugs 2 angepasst werden.

### Bezugszeichenliste

- 1: Vorrichtung
- 2: Fahrzeug
- 3: hydraulische Betätigungseinheit
- 4: Schleppgerät
- 5: Boden
- 6: Fahrtrichtung
- 7: Lageerfassungseinheit
- 8: Kamera
- 9a: erste Lageerfassungsmarkierung
- 9b: zweite Lageerfassungsmarkierung
- 9c: dritte Lageerfassungsmarkierung
- 10: Auswerteeinheit
- 11: datenleitende Verbindung
- 12: Fahrzeugsteuerung
- 13: Steuergerät
- 14: Hubwerk
- 15: Hubmechanismus
- 16: Oberlenker
- 17: Unterlenker
- 18: Zugkraftmesseinrichtung
- 19: spannungsoptisches Material
- 20: Pumpe
- 21: Regelventil
- 22: Träger
- 23: Lichtquelle
- 24: Einheit
- 25: Höhenlage
- 26: Referenz-Höhenlage

## Patentansprüche

1. Vorrichtung (1) an einem Fahrzeug (2) mit einer hydraulischen Betätigungseinheit (3) zur Regelung des Betriebs eines Schleppgeräts (4) an dem Fahrzeug (2), umfassend zumindest eine Lageerfassungseinheit (7) mit mindestens einer Kamera (8), mindestens einer Lageerfassungsmarkierung (9a, 9b, 9c), eine Auswerteeinheit (10) und eine datenleitende Verbindung (11) hin zu einem der hydraulischen Betätigungseinheit (3) zugeordneten Steuergerät (13).

2. Vorrichtung (1) nach Anspruch 1, **dadurch gekennzeichnet, dass** die mindestens eine Kamera (8) hin auf die mindestens eine Lageerfassungsmarkierung (9a, 9b, 9c) gerichtet ist.

3. Vorrichtung (1) nach Anspruch 1 oder 2, **dadurch gekennzeichnet, dass** die die mindestens eine Lageerfassungsmarkierung (9a, 9b, 9c) zumindest an dem Schleppgerät (4) oder an einem Hubwerk (14) des Schleppgeräts (4) angeordnet ist.

4. Vorrichtung (1) nach einem der vorhergehenden Ansprüche, **dadurch gekennzeichnet, dass** die mindestens eine Kamera (8) zumindest am Fahrzeug (2) oder an dem Schleppgerät (4) angeordnet ist.

5. Vorrichtung (1) nach einem der vorhergehenden Ansprüche, **dadurch gekennzeichnet, dass** mehrere voneinander beabstandete Lageerfassungsmarkierungen (9a, 9b, 9c) vorgesehen sind.

6. Vorrichtung (1) nach einem der vorhergehenden Ansprüche, **dadurch gekennzeichnet, dass** zu der Lageerfassungseinheit (7) zusätzlich eine Zugkraftmesseinrichtung (18) vorhanden ist, die datenleitend mit der Auswerteeinheit (10) verbunden ist.

7. Vorrichtung (1) nach Anspruch 6, **dadurch gekennzeichnet, dass** die Zugkraftmesseinrichtung (18) mit der mindestens einen Kamera (8) gekoppelt ist und diese auf ein spannungsoptisches Material (19) gerichtet ist.

8. Vorrichtung (1) nach Anspruch 7, **dadurch gekennzeichnet, dass** das spannungsoptische Material (19) zumindest am Schleppgerät (4) oder am Hubwerk (14) angebracht ist.

9. Verfahren zum Betrieb eines Fahrzeugs (2) mit einer hydraulischen Betätigungseinheit (3) zur Regelung des Betriebs eines Schleppgeräts (4) an dem Fahrzeug (2), wobei das Fahrzeug eine Vorrichtung gemäß einem der vorhergehenden Ansprüche aufweist und das Verfahren zumindest die folgenden Schritte umfasst:
a) Erfassen der mindestens einen Lageerfassungsmarkierung (9a, 9b, 9c) mittels einer darauf gerichteten Kamera (8);
b) Ermitteln einer Höhenlage (25) des Schleppgeräts (4) in Bezug auf den Boden (5) aus der erfassten Lage der Lageerfassungsmarkierungen (9a, 9b, 9c) und der bekannten Gestalt des Schleppgeräts (4);
c) Vergleichen der ermittelten Höhenlage (25) mit einer Referenz-Höhenlage (26);
d) Aktivieren der hydraulischen Betätigungseinheit (3), wenn die ermittelte Höhenlage (25) von einer Referenz-Höhenlage (26) abweicht.

10. Verfahren nach Anspruch 9, bei dem alle Schritte a) bis d) während der Fahrt des Fahrzeugs (2) durchgeführt werden.

11. Verfahren zum Betrieb eines Fahrzeugs (2) mit einer hydraulischen Betätigungseinheit (3) zur Regelung des Betriebs eines Schleppgeräts (4) an dem Fahrzeug (2), wobei das Fahrzeug eine Vorrichtung gemäß einem der vorhergehenden Ansprüche 7 oder 8 aufweist und das Verfahren zumindest die folgenden Schritte umfasst:
A) Erfassen des Zustands des spannungsoptischen Materials (19) mittels einer darauf gerichteten Kamera (8);
B) Ermitteln einer Zugkraft am Schleppgerät (4) aus dem erfassten Zustand des spannungsoptischen Materials (19);
C) Vergleichen der ermittelten Zugkraft mit einer Referenz-Zugkraft;
D) Aktivieren der hydraulischen Betätigungseinheit (3), wenn die ermittelte Zugkraft von einer Referenz-Zugkraft abweicht.

12. Verfahren nach Anspruch 11, bei dem alle Schritte A) bis D) während der Fahrt des Fahrzeugs (2) durchgeführt werden.
